# EUROPEAN PATENT SPECIFICATION

(11) **EP 4 560 111 B1**
(45) Date of publication and mention of the grant of the patent: **02.09.2026**
(21) Application number: 23865136.8
(22) Date of filing: 07.08.2023
(51) Int. Cl.: F01D 5/18, F01D 9/02, F01D 25/12, F02C 7/18, F23R 3/00

(54) **HEAT-EXCHANGING PARTITION WALL**
WÄRMETAUSCHENDE TRENNWAND
PAROI DE SÉPARATION D'ÉCHANGE DE CHALEUR

(30) Priority: 16.09.2022 JP 2022148192
(43) Date of publication of application: 28.05.2025
(73) Proprietor: Mitsubishi Heavy Industries Aero Engines, Ltd., Komaki-shi, Aichi 485-0826, (JP)
(72) Inventor: IKEDA, Yutaka, Komaki-shi, Aichi 485-0826 (JP)
(74) Representative: Studio Torta S.p.A.
(86) International application number: PCT/JP2023/028754
(87) International publication number: WO 2024/057776

(56) References cited:
- EP-A1- 3 663 649
- EP-A1- 3 964 691
- EP-A1- 4 317 650
- EP-A2- 1 533 481
- JP-A- 2005 147 132
- JP-A- 2017 089 432
- JP-A- S61 231 330
- US-A1- 2010 221 121
- US-A1- 2018 073 737
- US-A1- 2020 095 870
- US-A1- 2021 131 289
- US-B2- 10 557 354
- US-B2- 10 584 595
- US-B2- 9 297 261
- US-B2- 9 297 261

## Description

### Technical Field

The present disclosure relates to an assembly comprising a heat exchange bulkhead and a high-temperature component of an aircraft engine.

The present application claims priority based on Japanese Patent Application No. 2022-148192 filed in Japan on September 16, 2022.

### Background Art

In the related art, heat exchange bulkheads have been designed to improve the heat transfer efficiency between high-temperature components and a gaseous refrigerant (cooling air). For example, PTL 1 discloses providing pins on an inner wall member (high-temperature component) of a combustion liner. PTL 2 proposes a combustor panel with dirt tolerant pins.

### Citation List

### Patent Literature

[PTL 1] Japanese Unexamined Patent Application Publication No. 2013-104307
[PTL 2] EP 3 663 649 A1

### Summary of Invention

### Technical Problem

However, in the technology disclosed in PTL 1, the pin has a rectangular shape when the pin is viewed in a direction extending from the inner wall member. This may result in the cooling air separating over the entire outer peripheral surface of the pin. When separation of the cooling air occurs, the heat transfer efficiency between the high-temperature components and the cooling air decreases, and the cooling effect on the high-temperature components decreases.

The present disclosure has been made in consideration of the above-mentioned problems, and an object of the present disclosure is to provide a heat exchange bulkhead that can improve the cooling effect on high-temperature components of an aircraft engine.

### Solution to Problem

In order to achieve the above-described object, an assembly according to claim 1 is proposed.

### Advantageous Effects of Invention

According to the assembly of the present invention, it is possible to improve the cooling effect on high-temperature components of an aircraft engine.

### Brief Description of Drawings

Fig. 1 is a diagram schematically showing an example of a configuration of an aircraft engine.
Fig. 2 is a diagram schematically showing a configuration of a heat exchange bulkhead according to a first embodiment.
Fig. 3 is a diagram showing an outer shape of a fin according to the first embodiment.
Fig. 4 is a diagram schematically showing a configuration of an upstream fillet according to the first embodiment.
Fig. 5 is a diagram schematically showing a configuration of a downstream fillet according to the first embodiment.
Fig. 6 is an explanatory diagram of the configuration of the upstream fillet and the downstream fillet according to the first embodiment.
Fig. 7 is a diagram showing a velocity distribution of compressed air around a fin in the related art.
Fig. 8 is a diagram showing a flow of compressed air at the base of a fin when an upstream fillet according to the first embodiment is not provided.
Fig. 9 is a diagram showing a disposition of fins according to some embodiments.
Fig. 10 is a diagram schematically showing a configuration of a heat exchange bulkhead according to some embodiments.
Fig. 11 is a diagram schematically showing a configuration of a heat exchange bulkhead of an assembly according to the invention,
Fig. 12 is a diagram schematically showing a configuration of a concave portion according to the invention,
Fig. 13 is a diagram schematically showing a configuration of a heat exchange bulkhead according to some embodiments of the invention.

### Description of Embodiments

Hereinafter, a heat exchange bulkhead according to an embodiment of the present disclosure will be described with reference to the drawings. Such an embodiment shows one aspect of the present disclosure, does not limit the disclosure, and can be optionally modified within the scope of the technical idea of the present disclosure.

### (Aircraft Engine)

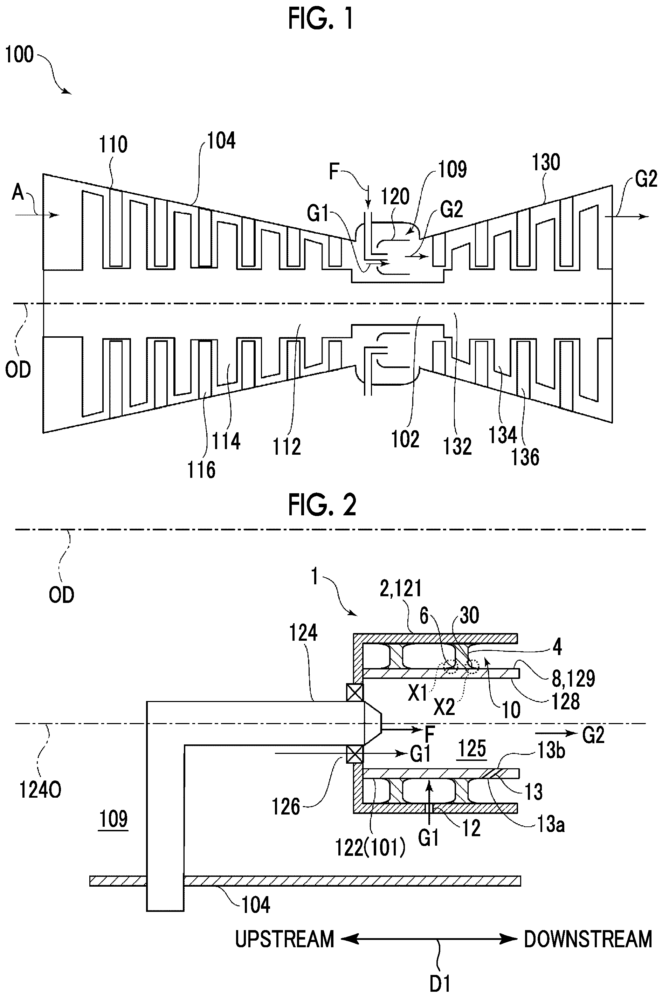

Fig. 1 is a diagram schematically showing an example of the configuration of an aircraft engine 100. In the embodiment illustrated in Fig. 1, the aircraft engine 100 includes a compressor 110 for generating compressed air G1, a combustor 120 for generating combustion gas G2 using the compressed air G1 and fuel F, and a turbine 130 configured to be rotationally driven by the combustion gas G2.

The compressor 110 includes a compressor rotor 112, compressor rotor blades 114, and compressor stator vanes 116. The compressor rotor 112 has a rod shape and is configured to be rotatable about an axis OD. The compressor rotor 112 has a longitudinal direction along an axial direction in which the axis OD extends.

In the embodiment illustrated in Fig. 1, the compressor rotor 112 and a turbine rotor 132 (described later) are integrally connected on the axis OD. In other words, the aircraft engine 100 includes a rotating shaft 102 configured with the compressor rotor 112 and the turbine rotor 132. The aircraft engine 100 further includes a casing 104 that surrounds the rotating shaft 102 from the radial outside in a radial direction centered on the axis OD.

The compressor rotor blades 114 are embedded in the compressor rotor 112 and rotate together with the turbine rotor 132. The compressor stator vanes 116 are fixed to the casing 104. The compressor 110 is configured to compress and increase the pressure of air A taken in from outside the aircraft engine 100 between the compressor rotor blades 114 and the compressor stator vanes 116, and supply this compressed air G1 to the combustor 120. In the embodiment illustrated in Fig. 1, a compressed air chamber 109 for supplying compressed air G1 to the inside is formed in the casing 104. In addition, the combustor 120 is disposed in the compressed air chamber 109.

The turbine 130 is rotationally driven by the combustion gas G2 supplied from the combustor 120. As illustrated in Fig. 1, the turbine 130 includes a turbine rotor 132, turbine rotor blades 134, and turbine stator vanes 136. The turbine rotor 132 has a rod shape and is configured to be rotatable about the axis OD. The turbine rotor blades 134 are embedded in the turbine rotor 132. The turbine stator vanes 136 are fixed to the casing 104. The turbine 130 rotates and drives the turbine rotor 132 by passing the combustion gas G2 supplied from the combustor 120 through each of the turbine rotor blades 134 and the turbine stator vanes 136. The above-mentioned compressor 110 receives the rotational force of the turbine 130 via the turbine rotor 132 and compresses the air A flowing through the compressor 110. In addition, the turbine 130 exhausts the combustion gas G2 that has passed through the turbine rotor blades 134 and the turbine stator vanes 136 to the outside of the aircraft engine 100 as propulsion for the aircraft.

### <First Embodiment>

### (Heat Exchange Bulkhead)

A heat exchange bulkhead 1 according to the present disclosure air-cools a high-temperature component 101 of an aircraft engine 100. In a first embodiment, the high-temperature component 101 includes a combustor panel 122 (101) of a combustor 120. Fig. 2 is a diagram schematically showing the configuration of the heat exchange bulkhead 1 according to the first embodiment.

Before describing the heat exchange bulkhead 1, the configuration of the combustor 120 will be described. As illustrated in Fig. 2, the combustor 120 includes a combustion liner 121, a combustor panel 122, and a fuel nozzle 124. The combustion liner 121 is disposed within the compressed air chamber 109. The combustion liner 121 has a ring shape extending along the axis OD, and is a so-called annular liner. A combustion space 125 in which fuel F ejected from the fuel nozzle 124 and compressed air G1 are mixed and combusted is formed inside the combustor panel 122. In other words, an inner peripheral surface 128 of the combustor panel 122 faces this combustion space 125. The combustor panel 122 is supported by the combustion liner 121 such that a gap (a cooling flow path 10 to be described later) is formed between the combustor panel 122 and the combustion liner 121 in the axial direction in which the axis OD extends. Such a combustor 120 is configured to mix and combust fuel F and compressed air G1 to generate combustion gas G2, which is the working fluid of the turbine 130, and supply this combustion gas G2 to the turbine 130.

In the embodiment illustrated in Fig. 2, combustor 120 further includes a swirler 126 provided around the fuel nozzle 124. The swirler 126 imparts a swirling flow to the compressed air G1 supplied from the compressor 110 to form a vortex in the combustion space 125 and recirculates the high-temperature combustion gas, thereby stabilizing the flame.

The heat exchange bulkhead 1 will be described. As illustrated in Fig. 2, the heat exchange bulkhead 1 includes a wall 2, a fin 4, and an upstream fillet 6. The wall 2 defines a cooling flow path 10 between an outer peripheral surface 129 (hereinafter referred to as a cooling surface 8) of the combustor panel 122 and the wall 2, through which the compressed air G1 flows along a first direction D1. In the first embodiment, the wall 2 includes the combustion liner 121. In the first embodiment, the heat exchange bulkhead 1 has a double cooling structure constituted by the combustion liner 121 and the combustor panel 122. In the first embodiment, the first direction D1 is the direction in which the axis OD extends, and the upstream side of the first direction D1 refers to the compressor 110 side, and the downstream side of the first direction D1 refers to the turbine 130 side.

In the first embodiment, an axis 1240 and the axis OD of the fuel nozzle 124 extend in the same direction as each other, but the present disclosure is not limited to this embodiment. In some embodiments, the axis 1240 and the axis OD of the fuel nozzle 124 extend in directions different from each other, and the first direction D1 is the direction in which the axis 1240 of the fuel nozzle 124 extends.

In the first embodiment, as illustrated in Fig. 2, impingement cooling holes 12 are formed in the wall 2, and compressed air G1 is introduced from the compressed air chamber 109 into the cooling flow path 10 via the impingement cooling holes 12. The heat exchange bulkhead 1 cools the combustor panel 122 by injecting compressed air G1 toward and colliding with the combustor panel 122.

In the first embodiment, as illustrated in Fig. 2, the combustor panel 122 is formed with effusion cooling holes 13. The effusion cooling hole 13 extends linearly such that an opening 13a on the cooling surface 8 side is located on the upstream side of an opening 13b on the inner peripheral surface 128 side in the first direction D1. In other words, the effusion cooling hole 13 is inclined with respect to the first direction D1. The heat exchange bulkhead 1 cools the combustor panel 122 by allowing compressed air G1 to flow out into the combustion space 125 via the effusion cooling holes 13 and forming a gas film on the inner peripheral surface 128 exposed to the high-temperature combustion gas G2. In the embodiment illustrated in Fig. 2, the effusion cooling hole 13 extends linearly, but the present disclosure is not limited to this embodiment. For example, the effusion cooling hole 13 may extend in a curved shape.

The fin 4 is provided on the cooling surface 8. In the first embodiment, as illustrated in Fig. 2, a plurality of fins 4 are provided on the cooling surface 8, and each of the plurality of fins 4 extends from the combustor panel 122 to the wall 2. Note that the method of installing the fins 4 is not particularly limited. The fins 4 may, for example, be integrally formed with the combustor panel 122, welded to the combustor panel 122, or fitted to the combustor panel 122 as a separate component.

Hereinafter, the direction in which the fins 4 extend (the height direction of the fins 4) is referred to as a second direction D2. The second direction D2 and the first direction D1 (the length direction of the fins 4) are orthogonal to each other. Of the second direction D2, the direction toward the cooling surface 8 side is defined as the lower side of the second direction D2, and the direction opposite to the lower side is defined as the upper side. A direction orthogonal to each of the first direction D1 and the second direction D2 (the width direction of the fin 4) is defined as a third direction D3. One of the third directions is defined as a left direction, and the direction opposite to the left direction is defined as a right direction.

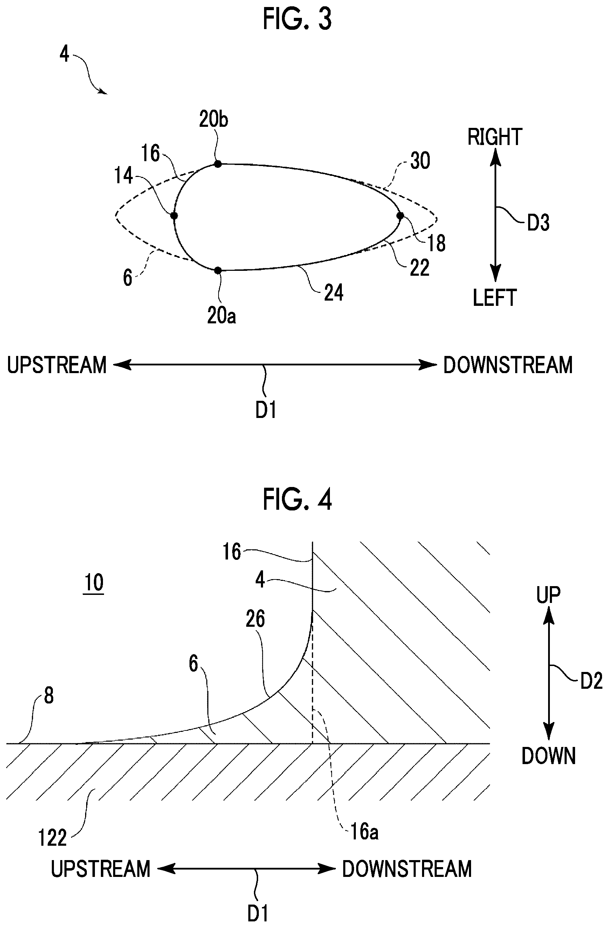

Fig. 3 is a diagram (plan view) showing an outer shape of the fin 4 according to the first embodiment, in which the fin 4 is viewed from an opposing direction facing the cooling surface 8. This opposing direction is the second direction D2 (the height direction of the fins 4). As illustrated in Fig. 3, the fin 4 has a curved shape in which a front surface 16 including at least a leading edge 14 is convex toward the upstream side of the first direction D1 when viewed from the second direction D2. In other words, the fin 4 has a length in the third direction D3 that increases (a width that increases) from the leading edge 14 toward the downstream side of the first direction D1.

The front surface 16 of the fin 4 faces the upstream side of the first direction D1. In the first embodiment, the front surface 16 of the fin 4 is located on the upstream side of both ends 20a and 20b that define the maximum width of the fin 4 in the first direction D1. In the second direction D2, the front surface 16 of the fin 4 and the upstream fillet 6 (shown by a dotted line in Fig. 3) overlap each other. In some embodiments, the front surface 16 of the fin 4 includes both ends 20a and 20b of the fin 4.

In the first embodiment, as illustrated in Fig. 3, the fin 4 has a curved shape in which a rear surface 22 including at least a trailing edge 18 is convex toward the downstream side of the first direction D1 when viewed from the second direction D2. In other words, the fin 4 has a length in the third direction D3 that decreases (a width that decreases) toward the trailing edge 18.

The rear surface 22 of the fin 4 faces the downstream side of the first direction D1. In the first embodiment, the rear surface 22 of the fin 4 is located on the downstream side of both ends 20a and 20b of the fin 4 in the first direction D1. In the third direction D3, the rear surface 22 of the fin 4 and a downstream fillet (shown by a dotted line in Fig. 3) described later overlap each other. In some embodiments, the rear surface 22 of the fin 4 includes both ends 20a and 20b of the fin 4.

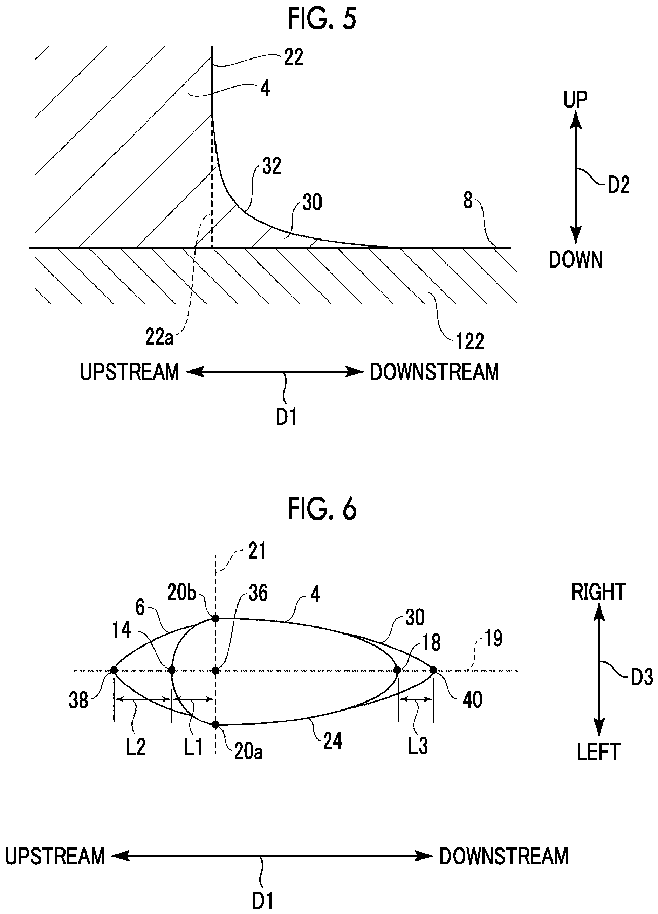

In the first embodiment, as illustrated in Fig. 3, the fin 4 includes a side surface 24 connecting the front surface 16 and the rear surface 22. The side surface 24 is located between the front surface 16 and the rear surface 22 in the first direction D1 and includes both ends 20a and 20b of the fin 4. The length of the side surface 24 of the fin 4 in the third direction D3 decreases from both ends 20a and 20b of the fin 4 toward the leading edge 14, and the length of the side surface 24 thereof in the third direction D3 decreases from both ends 20a and 20b of the fin 4 toward the trailing edge 18. In the first direction D1, both ends 20a and 20b of the fin 4 are located closer to the leading edge 14 than the trailing edge 18. Both ends 20a and 20b of the fin 4 are at the same position as each other in the first direction D1. The fin 4 has a shape that is line-symmetrical about a first line 19 (see Fig. 6) described later. In other words, the fin 4 having such a front surface 16, rear surface 22, and side surface 24 is formed in a teardrop shape.

Fig. 4 is a diagram schematically showing the configuration of the upstream fillet 6 according to the first embodiment, in which a first region X1 shown in Fig. 2 is enlarged. As illustrated in Fig. 4, the upstream fillet 6 extends along the upstream side of the first direction D1 from the front surface 16 of the fin 4 to a connection with the cooling surface 8. More specifically, the upstream fillet 6 extends along the upstream side of the first direction D1 from a lower end portion 16a of the front surface 16 of the fin 4. In other words, the upstream fillet 6 is provided at the base of the fin 4. The upstream fillet 6 has a curved surface 26 that is concavely curved with respect to the cooling flow path 10.

In the first embodiment, as illustrated in Fig. 2, the heat exchange bulkhead 1 further includes a downstream fillet 30. Fig. 5 is a diagram schematically showing the configuration of the downstream fillet 30 according to the first embodiment, in which a second region X2 shown in Fig. 2 is enlarged. As illustrated in Fig. 5, the downstream fillet 30 extends along the downstream side of the first direction D1 from the rear surface 22 of the fin 4 to a connection with the cooling surface 8. More specifically, the downstream fillet 30 extends along the downstream side of the first direction D1 from a lower end portion 22a of the rear surface 22 of the fin 4. In other words, the downstream fillet 30 is provided at the base of the fin 4. The downstream fillet 30 has a rear curved surface 32 that is concavely curved with respect to the cooling flow path 10.

Fig. 6 is an explanatory diagram of the configuration of the upstream fillet 6 and the downstream fillet 30 according to the first embodiment. As illustrated in Fig. 6, the upstream fillet 6 has a curved shape that is convex toward the upstream side of the first direction D1. The downstream fillet 30 has a curved shape that is convex toward the downstream side of the first direction D1. An imaginary straight line passing through the leading edge 14 and the trailing edge 18 of the fin 4 is defined as the first line 19, an imaginary straight line orthogonal to the first line 19 and passing through both ends 20a and 20b of the fin 4 is defined as the second line 21, the length from an intersection 36 where the first line 19 and the second line 21 intersect with each other to the leading edge 14 of the fin 4 is defined as L1, and the length from the leading edge 14 of the fin 4 to an upstream end 38 of the upstream fillet 6 on the upstream side of the first direction D1 is defined as L2. The intersection 36 is closer to the leading edge 14 than to the trailing edge 18 of the fin 4. The heat exchange bulkhead 1 includes a large upstream fillet 6 that satisfies L2 ≥ 0.7L1.

As illustrated in Fig. 6, when the length from the trailing edge 18 of the fin 4 to a downstream end 40 on the downstream side of the first direction D1 of the downstream fillet 30 is defined as L3, L2 > L3 is satisfied. In other words, the upstream fillet 6 is larger than the downstream fillet 30.

### (Action and Effect)

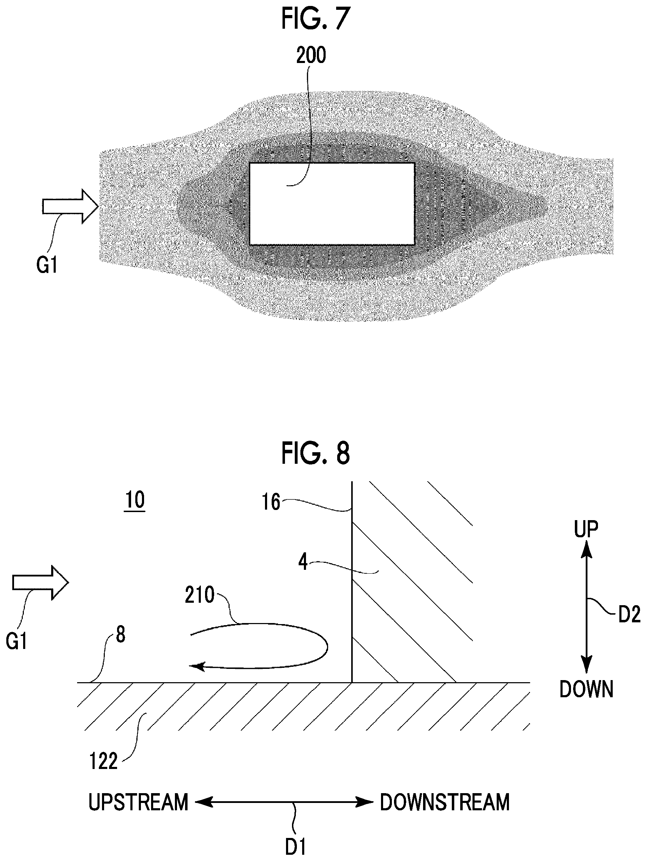

The action and effect of the heat exchange bulkhead 1 according to the first embodiment will be described. Fig. 7 is a diagram showing the velocity distribution of compressed air G1 around a fin 200 in the related art. In Fig. 7, the difference in velocity is indicated by shading, and the darker the color, the slower the velocity of the compressed air G1. The fin 200 in the related art has a rectangular shape when viewed from the second direction D2, and as shown in Fig. 7, the velocity of the compressed air G1 is slowest in the vicinity of the fin 200 in the related art. In other words, separation of the compressed air G1 occurs.

According to the first embodiment, as illustrated in Fig. 3, since the fin 4 is formed in a teardrop shape, the compressed air G1 can flow smoothly the downstream side of the first direction D1 along the front surface 16, the side surface 24, and the rear surface 22 of the fin 4, in that order, thereby suppressing separation of the compressed air G1 around the fin 4.

Fig. 8 is a diagram showing the flow of compressed air G1 at the base of the fin 4 when the upstream fillet 6 according to the first embodiment is not provided. Even when the fin 4 is formed in a teardrop shape, secondary flow 210 of the compressed air G1 may be generated at the base of the fin 4, as shown in Fig. 8. According to the first embodiment, by providing the upstream fillet 6 and the downstream fillet 30 at the base of the fin 4, the secondary flow 210 of the compressed air G1 at the base of the fin 4 can be suppressed.

Therefore, according to the first embodiment, separation of the compressed air G1 around the fin 4 and the secondary flow 210 of the compressed air G1 at the base of the fins 4 are suppressed, thereby improving the heat transfer efficiency between the compressed air G1 and the combustor panel 122 and improving the cooling effect on the combustor panel 122.

Furthermore, according to the first embodiment, the amount of compressed air G1 supplied to the heat exchange bulkhead 1 can be reduced due to the improved cooling effect. Then, by supplying this reduced compressed air G1 to the fuel nozzle 124, lean combustion in the combustion space 125 is promoted, and the generation of nitrogen oxides (NOx) can be suppressed.

The compressed air G1 may contain powder such as sand and dust. According to the first embodiment, the heat exchange bulkhead 1 includes the upstream fillet 6 and the downstream fillet 30, and therefore the generation of a secondary flow 210 of the compressed air G1 at the base of the fin 4 is suppressed. Therefore, the accumulation of the powder at the base of the fin 4 can be suppressed, and a decrease in heat transfer efficiency due to the accumulation of the powder can be suppressed.

According to the first embodiment, the heat exchange bulkhead 1 includes a large upstream fillet 6 that satisfies L2 ≥ 0.7L1, thereby enhancing the effect of suppressing the secondary flow of compressed air G1 in the portion of the cooling surface 8 close to the front surface 16 of the fin 4 (the upstream base of the fin 4 in the first direction D1). In some embodiments, the upstream fillet 6 is designed based on a velocity analysis of the compressed air G1.

In the first embodiment, the heat exchange bulkhead 1 includes the upstream fillet 6 and the downstream fillet 30, but the present disclosure is not limited to this embodiment. In some embodiments, the heat exchange bulkhead 1 includes an upstream fillet 6 but does not include a downstream fillet 30. Although not shown, in some embodiments, the heat exchange bulkhead 1 further includes a lateral fillet extending along the third direction D3 from the side surface 24 to a connection with the cooling surface 8 and having a lateral curved surface that is concavely curved. In some embodiments, the entire periphery of the fin 4 is surrounded by the upstream fillet 6, the downstream fillet 30, and the lateral fillet when viewed from the second direction D2.

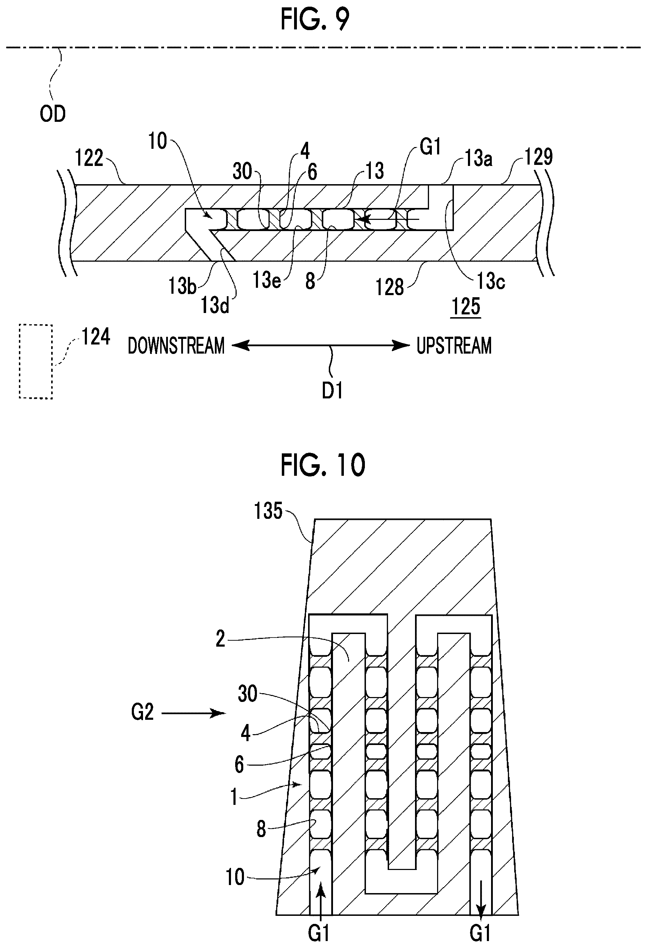

In the first embodiment, the outer peripheral surface 129 of the combustor panel 122 is the cooling surface 8, and the fin 4 is located within the cooling flow path 10, but the present disclosure is not limited to this embodiment. Fig. 9 is a diagram showing the disposition of fins 4 according to some embodiments. As illustrated in Fig. 9, in some embodiments, each of the fin 4, the upstream fillet 6, and the downstream fillet 30 are located within the effusion cooling hole 13.

Specifically, in the embodiment illustrated in Fig. 9, the opening 13b of the effusion cooling hole 13 on the inner peripheral surface 128 side of the combustor panel 122 is located on the downstream side of the first direction D1 (closer to the fuel nozzle 124) than the opening 13a on the outer peripheral surface 129 side. Such an effusion cooling hole 13 includes a first extension portion 13c extending from the opening 13a on the outer peripheral surface 129 side of the combustor panel 122 toward the inner peripheral surface 128, a second extension portion 13d extending from the opening 13b on the inner peripheral surface 128 side toward the outer peripheral surface 129, and a connection portion 13e connecting a tip of the first extension portion 13c and a tip of the second extension portion 13d.

The connection portion 13e extends linearly along the direction in which the combustor panel 122 extends. In the embodiment illustrated in Fig. 9, the first direction D1 is the direction in which the axis OD extends, and the downstream side of the first direction D1 refers to the compressor 110 side (the fuel nozzle 124 side) (the direction opposite to the downstream side of the first direction D1 in the first embodiment). The connection portion 13e of the effusion cooling hole 13 includes the cooling flow path 10. The cooling surface 8 is a surface that faces the connection portion 13e and faces the opposite side to the inner peripheral surface 128. In this case, the wall 2 is a part of the combustor panel 122 that defines the connection portion 13e.

The configuration of the effusion cooling hole 13 is not limited to the embodiment illustrated in Fig. 9. Although not shown, in some embodiments, the effusion cooling hole 13 includes a plurality of second extension portions 13d that are located at different positions in the first direction D1 relative to one connection portion 13e. Although not shown, in some embodiments, the combustor panels include a first combustor panel and a second combustor panel located closer to the turbine 130 than the first combustor panel. The effusion cooling hole 13 of the first combustor panel is configured to allow the compressed air G1 to flow out to form a gas film on the inner peripheral surface of the second combustor panel.

In the first embodiment, the heat exchange bulkhead 1 air-cools the combustor panel 122, but the present disclosure is not limited to this embodiment. The heat exchange bulkhead 1 may air-cool the high-temperature component 101 of the aircraft engine 100 other than the combustor panel 122. In some embodiments, the high-temperature component 101 includes a turbine blade 135 that comes into contact with the combustion gas G2 discharged from the combustor 120 of the aircraft engine 100. Fig. 10 is a diagram schematically showing the configuration of the heat exchange bulkhead 1 according to some embodiments, which shows the inside of the turbine blade 135. The turbine blade 135 may be the turbine rotor blade 134 illustrated and described in Fig. 1 or may be the turbine stator vane 136.

In the embodiment illustrated in Fig. 10, a cooling flow path 10 is formed inside the turbine blade 135, through which compressed air G1 for air-cooling the turbine blade 135 flows. Each of the fin 4, the upstream fillet 6, and the downstream fillet 30 is disposed in the cooling flow path 10.

### <Invention>

A heat exchange bulkhead 1 of an assembly according to the invention will be described. The heat exchange bulkhead 1 differs from the first embodiment in that a concave portion 50 is formed in a cooling surface 8. The same components as those in the first embodiment are denoted by the same reference numerals, and detailed description thereof will be omitted.

### (Configuration)

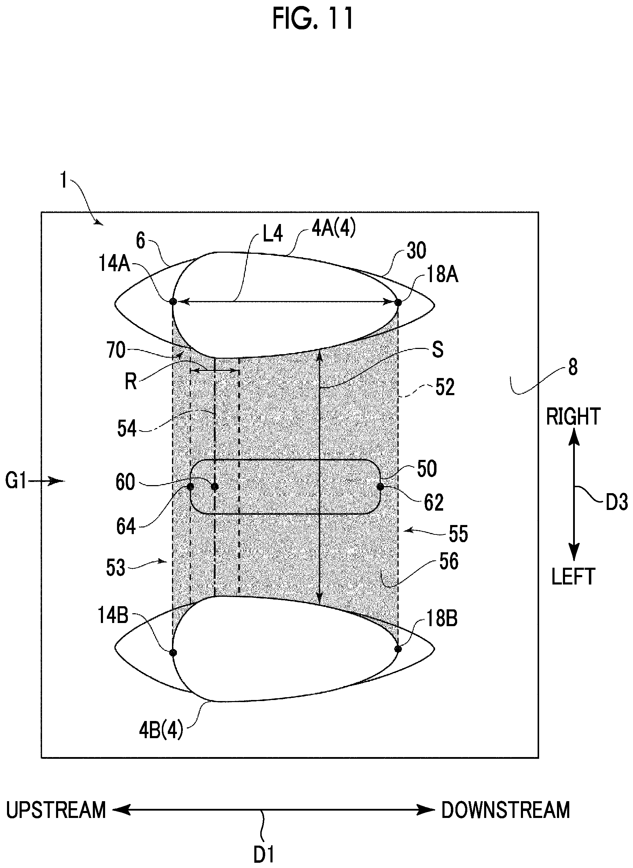

Fig. 11 is a diagram schematically showing the configuration of the heat exchange bulkhead 1 of the assembly according to the invention. As illustrated in Fig. 11, the heat exchange bulkhead 1 includes a first fin 4A (4) and a second fin 4B (4). The first fin 4A and the second fin 4B are disposed to overlap each other in the first direction D1. The first fin 4A and the second fin 4B are disposed to be spaced apart from each other in the second direction D2.

Although not shown, in some embodiments, the heat exchange bulkhead 1 further includes a third fin that is disposed on the upstream side or the downstream side of the first direction D1 relative to the first fin 4A and the second fin 4B. This third fin is located between the first fin 4A and the second fin 4B in the third direction D3. In some embodiments, the heat exchange bulkhead 1 includes a plurality of fins 4 disposed in a staggered pattern.

The first fin 4A and the second fin 4B have the same shape from each other and are formed in a teardrop shape. In addition, in the first direction D1, the position of a leading edge 14A of the first fin 4A and the position of a leading edge 14B of the second fin 4B are the same from each other. Similarly, in the first direction D1, the position of a trailing edge 18A of the first fin 4A and the position of a trailing edge 18B of the second fin 4B are the same from each other. The first fin 4A and the second fin 4B partially overlap each other in the first direction D1.

A portion of a gap 52 that has the shortest length in the third direction D3 is defined as a throat 54. A concave portion 50 is formed in a gap surface 56 of the cooling surface 8 facing the gap 52, the concave portion 50 being concaved downward in the first direction D1 to overlap the range in which the throat 54 is formed.

The deepest position of the concave portion 50 is defined as a deepest point 60, and the length from the leading edge 14A to the trailing edge 18A of the first fin 4A in the first direction D1 is defined as L4. As illustrated in Fig. 11, the deepest point 60 is located within a range R that is shifted in the first direction D1 from the position of the throat 54 by L3/10 to the upstream side and the downstream side of the first direction D1. The deepest point 60 and the throat 54 are at the same position as each other in the first direction D1.

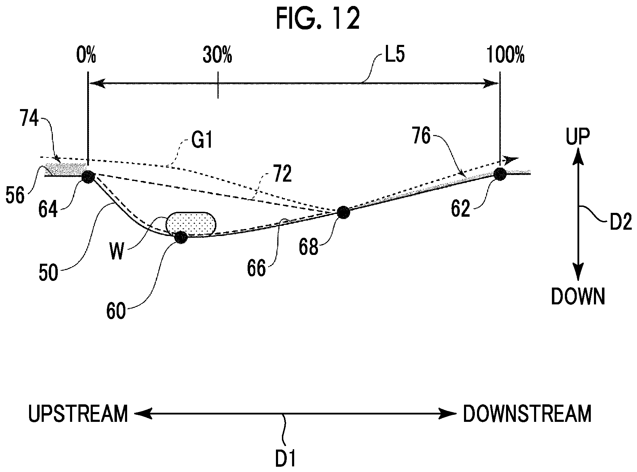

Fig. 12 is a diagram schematically showing the configuration of the concave portion 50. As illustrated in Fig. 12, the deepest point 60 is closer to an upstream point 64 on the upstream side of the first direction D1 than to a downstream point 62 on the downstream side of the concave portion 50 in the first direction D1. When the upstream point 64 is defined as a 0% position of a length L5 from the upstream point 64 to the downstream point 62, and the depth increases toward the downstream point 62, and the downstream point 62 is defined as a 100% position of the length L5, the deepest point 60 is located in the range greater than 0% and equal to or less than 45%. The concave portion 50 includes a downstream surface 66 that smoothly becomes shallower from the deepest point 60 toward the downstream point 62.

As illustrated in Fig. 11, each of the first fin 4A and the second fin 4B is formed in a teardrop shape, and therefore a flow path cross section S of the gap 52 cut in the second direction D2 becomes smaller from an inlet 53 of the gap 52 defined by the leading edge 14A of the first fin 4A and the leading edge 14B of the second fin 4B toward the throat 54. The flow path cross section S becomes larger from the throat 54 toward an outlet 55 of the gap 52 defined by the trailing edge 18A of the first fin 4A and the trailing edge 18B of the second fin 4B. The concave portion 50 is formed in the gap surface 56 such that the rate of change in the size of the flow path cross section S is 5% or less.

As illustrated in Fig. 11, the upstream fillet 6 and the upstream point 64 of the concave portion 50 overlap each other in the first direction D1. As illustrated in Fig. 11, the upstream fillet 6 includes a downstream portion 70 that overlaps the fin 4 in the first direction D1. In addition, in the first direction D1, the downstream portion 70 of the upstream fillet 6 and the upstream point 64 of the concave portion 50 overlap each other. In some embodiments, the concave portion 50 is located on the downstream side of the upstream fillet 6 in the first direction D1.

### (Action and Effect)

The action and effect of the heat exchange bulkhead 1 will be described. Since the concave portion 50 is formed in the gap surface 56, the size of the flow path cross section S can be adjusted by the concave portion 50, and separation of the compressed air G1 due to changes in the velocity of the compressed air G1 flowing through the gap 52 and friction loss between the compressed air G1 and the gap surface 56 can be suitably suppressed.

In particular, since the concave portion 50 is formed on the gap surface 56 such that the rate of change in the size of the flow path cross section S is 5% or less, the velocity of the compressed air G1 flowing through the gap 52 becomes approximately constant. Therefore, it is possible to reduce friction loss between the compressed air G1 and the gap surface 56 while suppressing separation of the compressed air G1 due to changes in the velocity of the compressed air G1.

When the concave portion 50 is not formed in the throat 54, the size of the flow path cross section S is the smallest, and therefore the compressed air G1 flows through the throat 54 at the highest velocity. Since the deepest point 60 of the concave portion 50 is located within the range R, the flow path cross section S near the throat 54 in the first direction D1 is expanded by the concave portion 50, thereby reducing the maximum flow velocity of the compressed air G1 and suppressing friction loss between the compressed air G1 and the gap surface 56.

Since the downstream portion 70 of the upstream fillet 6 and the upstream point 64 of the concave portion 50 in the first direction D1 overlap each other, even when the compressed air G1 contains powder such as sand and dust, the powder that collides with the upstream fillet 6 can be guided to the concave portion 50. This powder can then be accumulated in the concave portion 50. Therefore, a reduction in the heat transfer efficiency between the compressed air G1 and the combustor panel 122 caused by the powder can be suppressed.

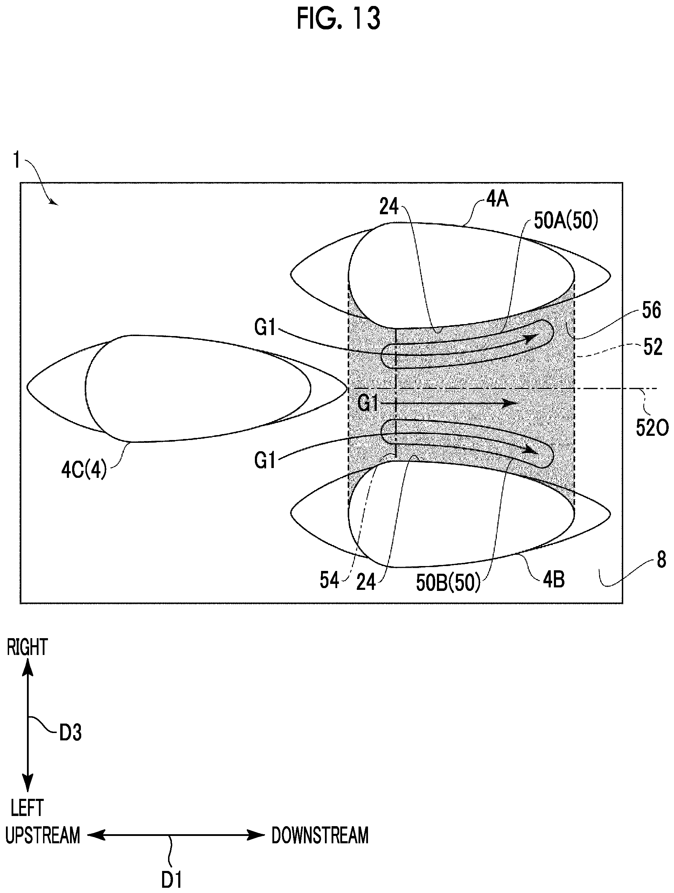

In particular, as illustrated and described in Fig. 13, the deepest point 60 is located within a range of greater than 0% and equal to or less than 45% of the length L5. Therefore, the compressed air G1 that flows into the concave portion 50 reattaches to a reattachment point 68 on the downstream surface 66 and flows the downstream side along the downstream surface 66 in the first direction D1. In other words, the concave portion 50 includes a non-flow space 72 through which the compressed air G1 does not flow or flows very little, and therefore contributes very little to the heat transfer efficiency between the compressed air G1 and the combustor panel 122. Furthermore, since the powder contained in the compressed air G1 accumulates in the non-flow space 72 of the concave portion 50 to form a deposit W, the reduction in heat transfer efficiency can be reduced to zero or very slightly.

Since the downstream surface 66 smoothly becomes shallower from the deepest point 60 toward the downstream point 62, the compressed air G1 that has been reattached to the reattachment point 68 can be smoothly guided to the downstream side of the first direction D1. The reattached compressed air G1 forms a boundary layer 76 that is thinner than a boundary layer 74 on the upstream side of the concave portion 50 in the first direction D1. Therefore, the heat transfer efficiency between the compressed air G1 and the combustor panel 122 can be improved.

One concave portion 50 is formed in the gap surface 56, but the present disclosure is not limited to this embodiment. A plurality of concave portions 50 may be formed in the gap surface 56. With this configuration, a dead water area formed on the gap surface 56 is reduced, friction loss between the compressed air G1 and the gap surface 56 is suppressed, and the accumulation of powder on the concave portion 50 is advantageously performed.

Fig. 13 is a diagram schematically showing the configuration of the heat exchange bulkhead 1 according to some embodiments. As illustrated in Fig. 13, the heat exchange bulkhead 1 includes a plurality of fins 4 disposed in a staggered pattern, and in addition to the first fin 4A and second fin 4B described above, further includes a third fin 4C (4) that is disposed on the upstream side of the first fin 4A and the second fin 4B in the first direction D1. This third fin 4C is located between the first fin 4A and the second fin 4B in the third direction D3. The third fin 4C is formed in a teardrop shape, similarly to each of the first fin 4A and the second fin 4B. Therefore, as illustrated in Fig. 13, the first fin 4A, the second fin 4B, and the third fin 4C are each disposed such that the compressed air G1 flowing to the left of the center of the gap 52 and the compressed air G1 flowing to the right of the center of the gap 52 each have a greater flow velocity than the compressed air G1 flowing through the center of the gap 52.

In some embodiments, as illustrated in Fig. 13, two concave portions 50 are formed in the gap surface 56. The two concave portions 50 are disposed to be spaced apart from each other in the third direction D3. Of the two concave portions 50, a first concave portion 50A (50) is located closer to the first fin 4A than a second concave portion 50B (50).

The first concave portion 50A is located to the right in the third direction D3 (toward the first fin 4A) of a center line 52O that passes through the center of the gap 52 in the third direction D3. The first concave portion 50A extends along the side surface 24 of the first fin 4A facing the gap 52. More specifically, the first concave portion 50A extends along an offset line of the side surface 24 of the first fin 4A facing the gap 52.

The second concave portion 50B is located to the left of the center line 52O in the third direction D3 (toward the second fin 4B). The second concave portion 50B extends along the side surface 24 of the second fin 4B facing the gap 52. More specifically, the second concave portion 50B extends along an offset line of the side surface 24 of the second fin 4B facing the gap 52.

When the flow velocity of the compressed air G1 flowing through the gap 52 is uneven, dead water areas or separation areas will occur in portions where the flow velocity is slow, which may result in increased friction loss (pressure loss) between the compressed air G1 and the gap surface 56 or accumulation of powder on the gap surface 56. According to the configuration illustrated in Fig. 13, by forming the first concave portion 50A, the flow velocity of the compressed air G1 flowing to the left of the center of the gap 52 (flowing along the side surface 24 of the first fin 4A facing the gap 52) can be reduced. Similarly, by forming the second concave portion 50B, the flow velocity of the compressed air G1 flowing to the right of the center of the gap 52 (flowing along the side surface 24 of the second fin 4B facing the gap 52) can be reduced. Therefore, the flow velocity of the compressed air G1 flowing through the gap 52 is made uniform, friction loss between the compressed air G1 and a portion of the gap surface 56 facing the center of the gap 52 can be suppressed, and the accumulation of powder on the portion of the gap surface 56 facing the center of the gap 52 can be suppressed.

### Reference Signs List

1: heat exchange bulkhead
2: wall
4: fin
4A: first fin
4B: second fin
6: upstream fillet
8: cooling surface
10: cooling flow path
14: leading edge
14A: leading edge of first fin
14B: leading edge of second fin
16: front surface
18: trailing edge
18A: trailing edge of first fin
18B: trailing edge of second fin
19: first line
21: second line
22: rear surface
26: curved surface
30: downstream fillet
32: rear curved surface
36: intersection
38: upstream end
40: downstream end
50: concave portion
52: gap
54: throat
56: gap surface
60: deepest point
62: downstream point
64: upstream point
66: downstream surface
68: reattachment point
100: aircraft engine
101: high-temperature component
130: turbine
110: compressor
120: combustor
122: combustor panel
124: fuel nozzle
125: combustion space
128: inner peripheral surface
129: outer peripheral surface
135: turbine blade
D1: first direction (length direction)
D2: second direction (height direction)
D3: third direction (width direction)
F: fuel
G1: compressed air
G2: combustion gas
S: flow path cross section

## Claims

1. Assembly comprising a heat exchange bulkhead (1) and a high-temperature component (101) of an aircraft engine (100), the heat exchange bulkhead (1) for air-cooling the high-temperature component (101), the heat exchange bulkhead (1) comprising:
a wall (2) that defines a cooling flow path (10) between a cooling surface (8) of the high-temperature component (101) and the wall (2), through which cooling air (g1) flows along a first direction (D1);
at least one fin (4) that is provided on the cooling surface (8) of the high-temperature component (101), the fin (4) having a curved shape in which a front surface (16), including at least a leading edge (14), is convex toward an upstream side of the first direction (D1) when viewed from a direction facing the cooling surface (8); and
an upstream fillet (6) that extends along the upstream side of the first direction (D1) from the front surface (16) of the at least one fin (4) to a connection with the cooling surface (8) and that has a curved surface (26) that is concavely curved,
wherein the at least one fin (4) includes a first fin (4A) and a second fin (4B) separate from the first fin (4A), the first fin (4A) and the second fin (4B) being disposed to overlap each other in the first direction (D1) and to be spaced apart from each other in a direction orthogonal to the first direction (D1), and
wherein a portion of a gap (52) formed between the first fin (4A) and the second fin (4B) that has a shortest length is defined as a throat (54),
**characterized in that** a concave portion (50) is formed in a gap surface (56) of the cooling surface (8) that faces the gap (52) in the first direction (D1) to overlap a range (R) in which the throat (54) is formed.

2. Assembly according to claim 1,
wherein, when an imaginary straight line passing through the leading edge (14) and a trailing edge (18) of the at least one fin (4) is defined as a first line (19), an imaginary straight line orthogonal to the first line (19) and passing through both ends (20a, 20b) that define a maximum width of the at least one fin (4) in a direction orthogonal to the first direction (D1) is defined as a second line (21), a length from an intersection (36) where the first line (19) and the second line (21) intersect with each other to the leading edge (14) of the at least one fin (4) is defined as L1, and a length from the leading edge (14) of the at least one fin (4) to an upstream end (38) of the upstream fillet (6) on the upstream side of the first direction (D1) is defined as L2,
the intersection (36) is closer to the leading edge (14) than to the trailing edge (18) of the at least one fin (4), and
L2 ≥ 0.7L1 is satisfied.

3. Assembly according to claim 1 or 2, wherein the heat exchange bulkhead (1) further comprises: a downstream fillet (30) that extends along a downstream side of the first direction (D1) from a rear surface (22) including at least a trailing edge (18) of the at least one fin (4) to a connection with the cooling surface (8) and that has a rear curved surface (32) that is concavely curved.

4. Assembly according to claim 1, wherein, when a deepest position of the concave portion (50) is defined as a deepest point (60), and a length from the leading edge (14A, 14B) to a trailing edge (18A,18B) of the at least one fin (4A,4B) in the first direction (D1) is defined as L4, the deepest point (60) is located within a range (R) shifted by L4/10 from a position of the throat (54) in the first direction (D1).

5. Assembly according to claim 1 or 4, wherein the concave portion (50) is formed in the gap surface (56) such that a rate of change in a size of a flow path cross section (S) when the gap (52) is cut in the direction orthogonal to the first direction (D1) is 5% or less.

6. Assembly according to claim 4 or 5, wherein the concave portion (50) includes a downstream surface (66) that becomes shallower from the deepest point (60) toward a downstream point (62) on a downstream side of the concave portion (50) in the first direction (D1).

7. Assembly according to any one of claims 1 to 6,
wherein the high-temperature component (101) includes a combustor panel (122) facing a combustion space (125) of a combustor (120) of the aircraft engine (100).

8. Assembly according to any one of claims 1 to 7,
wherein the high-temperature component (101) includes a turbine blade (135) that comes into contact with combustion gas (G2) discharged from a combustor (120) of the aircraft engine (100).

9. Assembly according to claim 1, wherein, in the first direction (D1), the upstream fillet (6) and an upstream point (64) of the concave portion (50) overlap each other.

## Patentansprüche

1. Baugruppe, umfassend eine Wärmeaustausch-Trennwand (1) und ein Hochtemperaturbauteil (101) eines Flugzeugtriebwerks (100), wobei die Wärmeaustausch-Trennwand (1) zur Luftkühlung des Hochtemperaturbauteils (101) dient,
wobei die Wärmeaustausch-Trennwand (1) Folgendes umfasst
eine Wand (2), die einen Kühlströmungsweg (10) zwischen einer Kühlfläche (8) des Hochtemperaturbauteils (101) und der Wand (2) definiert, durch den Kühlluft (g1) entlang einer ersten Richtung (D1) strömt;
mindestens eine Lamelle (4), die an der Kühlfläche (8) des Hochtemperaturbauteils (101) bereitgestellt ist, wobei die Lamelle (4) eine gekrümmte Form aufweist, bei der eine Vorderseite (16), die mindestens eine Vorderkante (14) einschließt, aus einer der Kühlfläche (8) zugewandten Richtung betrachtet zur stromaufwärtigen Seite der ersten Richtung (D1) hin konvex ist; und
eine stromaufwärts gerichtete Ausrundung (6), die sich entlang der stromaufwärts gelegenen Seite der ersten Richtung (D1) von der Vorderseite (16) der mindestens einen Lamelle (4) bis zu einer Verbindung mit der Kühlfläche (8) erstreckt und eine gekrümmte Oberfläche (26) aufweist, die konkav gekrümmt ist, wobei die mindestens eine Lamelle (4) eine erste Lamelle (4A) und eine von der ersten Lamelle (4A) getrennte zweite Lamelle (4B) einschließt, wobei die erste Lamelle (4A) und die zweite Lamelle (4B) so angeordnet sind, dass sie sich in der ersten Richtung (D1) überlappen und in einer Richtung senkrecht zur ersten Richtung (D1) voneinander beabstandet sind, und
wobei ein Abschnitt eines zwischen der ersten Lamelle (4A) und der zweiten Lamelle (4B) ausgebildeten Spalts (52), der die kürzeste Länge aufweist, als Verengung (54) definiert ist,
**dadurch gekennzeichnet, dass** in einer Spaltfläche (56) der Kühlfläche (8), die dem Spalt (52) in der ersten Richtung (D1) zugewandt ist, ein konkaver Abschnitt (50) ausgebildet ist, der einen Bereich (R) überlappt, in dem die Verengung (54) ausgebildet ist.

2. Baugruppe nach Anspruch 1,
wobei, wenn eine imaginäre Gerade, die durch die Vorderkante (14) und eine Hinterkante (18) der mindestens einen Lamelle (4) verläuft, als erste Linie (19) definiert ist, eine imaginäre Gerade, die senkrecht zur ersten Linie (19) verläuft und durch beide Enden (20a, 20b), die eine maximale Breite der mindestens einen Lamelle (4) in einer Richtung senkrecht zur ersten Richtung (D1) definieren, als zweite Linie (21) definiert ist, eine Länge von einem Schnittpunkt (36), an dem sich die erste Linie (19) und die zweite Linie (21) schneiden, bis zur Vorderkante (14) der mindestens einen Lamelle (4) als L1 definiert ist, und eine Länge von der Vorderkante (14) der mindestens einen Lamelle (4) bis zu einem stromaufwärtigen Ende (38) der stromaufwärtigen Ausrundung (6) auf der stromaufwärtigen Seite der ersten Richtung (D1) als L2 definiert ist,
der Schnittpunkt (36) näher an der Vorderkante (14) als an der Hinterkante (18) der mindestens einen Lamelle (4) liegt, und
die Bedingung L2 ≥ 0,7L1 erfüllt ist.

3. Baugruppe nach Anspruch 1 oder 2, wobei die Wärmeaustausch-Trennwand (1) ferner umfasst:
eine stromabwärts gerichtete Ausrundung (30), die sich entlang einer stromabwärts gerichteten Seite der ersten Richtung (D1) von einer Rückseite (22), die mindestens eine Hinterkante (18) der mindestens einen Lamelle (4) einschließt, bis zu einer Verbindung mit der Kühlfläche (8) erstreckt und eine hintere, konkav gekrümmte Fläche (32) aufweist.

4. Baugruppe nach Anspruch 1,
wobei, wenn eine tiefste Stelle des konkaven Abschnitts (50) als tiefster Punkt (60) definiert ist und eine Länge von der Vorderkante (14A, 14B) bis zu einer Hinterkante (18A, 18B) der mindestens einen Lamelle (4A, 4B) in der ersten Richtung (D1) als L4 definiert ist, der tiefste Punkt (60) innerhalb eines Bereichs (R) liegt, der um L4/10 gegenüber einer Position der Verengung (54) in der ersten Richtung (D1) versetzt ist.

5. Baugruppe nach Anspruch 1 oder 4,
wobei der konkave Abschnitt (50) in der Spaltfläche (56) derart ausgebildet ist, dass die Änderungsrate der Größe des Querschnitts (S) des Strömungswegs, wenn der Spalt (52) in einer zur ersten Richtung (D1) orthogonalen Richtung geschnitten wird, 5 % oder weniger beträgt.

6. Baugruppe nach Anspruch 4 oder 5,
wobei der konkave Abschnitt (50) eine stromabwärts gerichtete Fläche (66) einschließt, die vom tiefsten Punkt (60) hin zu einem stromabwärts gelegenen Punkt (62) auf der stromabwärts gelegenen Seite des konkaven Abschnitts (50) in der ersten Richtung (D1) flacher wird.

7. Baugruppe nach einem der Ansprüche 1 bis 6,
wobei das Hochtemperaturbauteil (101) eine Brennkammerplatte (122) einschließt, die einem Brennraum (125) einer Brennkammer (120) des Flugzeugtriebwerks (100) zugewandt ist.

8. Baugruppe nach einem der Ansprüche 1 bis 7,
wobei das Hochtemperaturbauteil (101) eine Turbinenschaufel (135) einschließt, die mit dem aus einer Brennkammer (120) des Flugzeugtriebwerks (100) austretenden Verbrennungsgas (G2) in Kontakt kommt.

9. Baugruppe nach Anspruch 1, wobei sich in der ersten Richtung (D1) die stromaufwärts gelegene Ausrundung (6) und ein stromaufwärts gelegener Punkt (64) des konkaven Abschnitts (50) überlappen.

## Revendications

1. Ensemble comprenant une cloison d'échange de chaleur (1) et un composant à haute température (101) d'un moteur d'avion (100), la cloison d'échange de chaleur (1) étant destinée à assurer le refroidissement par air du composant à haute température (101),
la cloison d'échange de chaleur (1) comprenant
une paroi (2) qui définit un trajet d'écoulement de refroidissement (10), entre une surface de refroidissement (8) du composant à haute température (101) et la paroi (2), à travers lequel de l'air de refroidissement (g1) circule le long d'une première direction (D1) ;
au moins une ailette (4) étant prévue sur la surface de refroidissement (8) du composant à haute température (101), l'ailette (4) présentant une forme incurvée dans laquelle une surface avant (16), comprenant au moins un bord d'attaque (14), est convexe vers un côté amont de la première direction (D1) lorsqu'elle est vue d'une direction faisant face à la surface de refroidissement (8) ; et
un congé amont (6) qui s'étend le long du côté amont de la première direction (D1), de la surface avant (16) de l'au moins une ailette (4) à un raccordement avec la surface de refroidissement (8), et qui présente une surface courbe (26) qui est incurvée de manière concave, ladite au moins une ailette (4) comprenant une première ailette (4A) et une seconde ailette (4B) distincte de la première ailette (4A), la première ailette (4A) et la seconde ailette (4B) étant disposées de manière à se chevaucher l'une et l'autre dans la première direction (D1) et à être espacées l'une de l'autre dans une direction orthogonale à la première direction (D1), et
une partie d'un interstice (52) formé entre la première ailette (4A) et la seconde ailette (4B), ayant la longueur la plus courte, étant définie comme un étranglement (54),
**caractérisé en ce qu'**une partie concave (50) est formée dans une surface d'interstice (56) de la surface de refroidissement (8) qui fait face à l'interstice (52) dans la première direction (D1), de manière à chevaucher une aire (R) dans laquelle est formé l'étranglement (54).

2. Ensemble selon la revendication 1,
dans lequel, lorsqu'une droite imaginaire passant par le bord d'attaque (14) et un bord de fuite (18) de l'au moins une ailette (4) est définie comme une première ligne (19), une droite imaginaire orthogonale à la première ligne (19) et passant par les deux extrémités (20a, 20b) qui définissent une largeur maximale de l'au moins une ailette (4) dans une direction orthogonale à la première direction (D1) est définie comme une seconde ligne (21), une longueur allant d'une intersection (36), où la première ligne (19) et la seconde ligne (21) se croisent, jusqu'au bord d'attaque (14) de l'au moins une ailette (4) est définie comme L1, et une longueur allant du bord d'attaque (14) de l'au moins une ailette (4) à une extrémité amont (38) du congé amont (6) du côté amont de la première direction (D1) est définie comme L2,
l'intersection (36) est plus proche du bord d'attaque (14) que du bord de fuite (18) de l'au moins une ailette (4), et
L2 ≥ 0,7 L1 est satisfait.

3. Ensemble selon la revendication 1 ou 2, la cloison d'échange de chaleur (1) comprenant en outre :
un congé aval (30) qui s'étend le long d'un côté aval de la première direction (D1) d'une surface arrière (22) comprenant au moins un bord de fuite (18) de l'au moins une ailette (4) à un raccordement avec la surface de refroidissement (8) et qui présente une surface arrière courbe (32) étant incurvée de manière concave.

4. Ensemble selon la revendication 1,
dans lequel, lorsque la position la plus profonde de la partie concave (50) est définie comme un point le plus profond (60), et qu'une longueur allant du bord d'attaque (14A, 14B) jusqu'à un bord de fuite (18A, 18B) de l'au moins une ailette (4A, 4B) dans la première direction (D1) est définie comme L4, le point le plus profond (60) est situé dans une plage (R) décalée de L4/10 par rapport à une position de l'étranglement (54) dans la première direction (D1).

5. Ensemble selon la revendication 1 ou 4,
la partie concave (50) étant formée dans la surface d'interstice (56) de telle sorte que le taux de variation d'une dimension de la section transversale (S) du trajet d'écoulement, lorsque l'interstice (52) est coupé dans une direction orthogonale à la première direction (D1), soit inférieur ou égal à 5 %.

6. Ensemble selon la revendication 4 ou 5,
la partie concave (50) comportant une surface aval (66) devenant moins profonde à partir du point le plus profond (60) vers un point aval (62) du côté aval de la partie concave (50) dans la première direction (D1).

7. Ensemble selon l'une quelconque des revendications 1 à 6,
le composant à haute température (101) comprenant un panneau de chambre de combustion (122) tourné vers un espace de combustion (125) d'une chambre de combustion (120) du moteur d'avion (100).

8. Ensemble selon l'une quelconque des revendications 1 à 7,
le composant à haute température (101) comprenant une aube de turbine (135) qui entre en contact avec les gaz de combustion (G2) déchargés par une chambre de combustion (120) du moteur d'avion (100).

9. Ensemble selon la revendication 1, dans lequel, dans la première direction (D1), le congé amont (6) et un point amont (64) de la partie concave (50) se chevauchent.
